# EUROPEAN PATENT SPECIFICATION

(11) **EP 4 546 227 B1**
(45) Date of publication and mention of the grant of the patent: **01.07.2026**
(21) Application number: 23206358.6
(22) Date of filing: 27.10.2023
(51) Int. Cl.: G06Q 10/04

(54) **METHOD AND DEVICE FOR CONTROLLING THE EFFICIENCY OF COOLING MACHINES**
VERFAHREN UND VORRICHTUNG ZUR REGELUNG DES WIRKUNGSGRADES VON KÜHLMASCHINEN
PROCÉDÉ ET DISPOSITIF DE CONTRÔLE DU RENDEMENT DE MACHINES FRIGORIFIQUES

(43) Date of publication of application: 30.04.2025
(73) Proprietor: Eberle, Giorgio, 31053 Pieve di Soligo (TV) (IT)
(72) Inventor: Carparelli, Augusto, 70043 Monopoli (BA) (IT); Formica, Aldo, 70043 Monopoli (BA) (IT)
(74) Representative: Citron, Massimiliano

(56) References cited:
- EP-A1- 2 998 894
- CN-A- 110 520 679

## Description

The invention relates to a method and device for controlling the efficiency of refrigerating machines in general, or machines with an inversion refrigeration cycle (heat pumps, etc.).

Nowadays, it is usual to check these machines periodically with routine maintenance every six months or even annually. To exchange thermal energy between fluids at different temperatures, these machines use a refrigeration circuit that consumes primary energy in direct proportion to both the efficiency of the refrigeration circuit itself and the efficiency of the exchangers used. Even if the optimal working and operating conditions for which they were designed vary, these machines are self-regulating and continue to operate up to the limit of the safety blocks. These arrangements, now widely used by manufacturers, make the machines increasingly reliable because they do not stop. However, they continue to run with abnormal energy consumption and without warning - unfortunately - the user, who then pays hefty bills.

Document CN 110520679 A refers to a controller for an HVAC unit, including a power measuring device for measuring input power being delivered to the HVAC unit, the input power corresponding to the nominal heat transfer provided by the HVAC unit.

The main object of the invention is then to propose a method and device to improve this state of the art.

An aspect of the invention relates to a method performed electronically by an electronic device, e.g. via software, to determine the real energy efficiency of an electric cool- and/or heat-making machine that is electrically powered and works to transfer heat from a source environment to a destination environment (heat pump) or vice versa (cooling of the destination environment), wherein the electronic device or software in real time:
detects the electrical power absorbed by the machine, here called Pₑₗ,
detects the caloric power absorbed or dissipated in the destination environment (i.e. the useful cooling or heating power delivered or absorbed by the machine), here called P_{d};
calculates the current efficiency of the machine as a function of the two powers Pₑₗ and P_{d},
determines the nominal efficiency of the machine by searching a database for a nominal efficiency value that is a function of the powers Pₑₗ and P_{d},
compares the current efficiency with the calculated nominal efficiency, and
outputs an information signal as a function of the order relationship between the current efficiency and the calculated nominal efficiency.

With the method, one is able to continuously monitor the operation of the machine by evaluating its performance, and allowing it to always be in line with what the machine manufacturer claims.

By *electronically executed method* here it is generally meant the automatic execution of a logical sequence of programmed commands, preferably with execution by software.

The *software* may be
(a) a program executed by a PC or a microprocessor or an electronic circuit, and the actions described here for the *software* are accomplished through program instructions (the programming language is not essential), or
(b) a program executed by an electronic circuit, and the actions described here for the *software* are accomplished through variation of logical states in the electronic circuit.

In the following, for descriptive convenience, the *software* will be referred to as the executor of the method, but without limitation.

The method is preferably and advantageously performed continuously, or periodically with a programmable interval.

An advantage of the method is that it is performed automatically, without manual intervention, ensuring reliability and continuity of surveillance.

In an advantageous variant, the nominal efficiency of the machine is determined - or the software determines the nominal efficiency of the machine - by searching a database for a nominal efficiency value that is a function of the powers Pₑₗ and P_{d}, and function of the detected temperature of the source environment; and/or
is a function of the powers Pₑₗ and P_{d}, and a function of the relative humidity of the air detected in the source environment.

Specifically, the nominal efficiency is calculated by the software as the ratio of P_{d}/P_{del}, but other formulas are also possible (for consistency and ease of comparison, nominal and current efficiency are calculated in the same way).

Specifically, the database comprises or consists of digitally searchable characteristic tables or curves, usually provided by the machine manufacturer.

Preferably, the software calculates the power P_{d} - or the power P_{d} is calculated - by detecting the temperature difference of a fluid circulating in a circuit, the difference being calculated between the temperature of the fluid in a supply duct supplying the destination environment and the temperature of the fluid in a return duct coming back from the destination environment. E.g. the difference measurement is obtained by subtracting a temperature datum of the fluid in the supply duct from a temperature datum of the fluid in the return duct, i.e. using two temperature sensors, one for each duct. It is otherwise possible to make a single differential temperature measurement.

Preferably, to generate the information signal the software assesses - or it is assessed - whether the current efficiency is within a compliance range around the nominal efficiency.

To directly optimize the efficiency, preferably as a function of the relationship between the current efficiency and the nominal efficiency, e.g. by the software,
a correction signal is generated and
the correction signal is sent to an electronic controller natively embedded (e.g. at the factory) in the machine to vary the machine's operating point (said electronic controller is an original component of the machine and acts to adjust the machine functions).

Preferably in the step of outputting the information signal, a/the message is transmitted to a remote user.

Preferably, to facilitate the communication toward the user, in the step of outputting the information signal
- an acoustic and/or visual signal is emitted, e.g. by driving a display and/or a sound generator, and/or
- a message is generated in the form of phone text, or e-mail or generic text message.

Thus the easy fruition by the user is favored, e.g. via smarphone.

In order to be able to intervene in case of low or insufficient efficiency, in the method there are the preferred steps of
- remotely receiving the information signal, and/or
- generate said correction signal remotely, and/or
- remotely transmitting the correction signal to the machine controller.

By *remote* it is meant a location other than the location of the machine and/or said electronic device.

The refrigeration machine on which the method acts generally serves to move thermal energy from a source environment with a lower temperature, to a destination environment characterized by a higher temperature.

To move this energy, the refrigeration machine uses, for example, a closed circuit operating at different pressures and temperatures. A compressor causes the circulation of a refrigerant fluid which, due to its specific thermodynamic characteristics,
when evaporated, is able to absorb energy from the source environment, and,
instead when compressed, is able to release it toward the destination environment.

The machine preferably comprises:
a first heat exchanger, to transfer to the destination environment the energy that the fluid has stored as a result of compression. The fluid in the gaseous state, giving away heat, condenses to a liquid state; and
a second heat exchanger, wherein the refrigerant fluid undergoes a new change of state and evaporates, so the fluid absorbs energy from the source environment.

The refrigeration and/or heating machine preferably comprises:
- a first closed fluid circuit to circulate a first refrigerant fluid, in the first circuit there being installed
   a compressor to push the refrigerant fluid along the first circuit,
   a first heat exchanger, to exchange heat between the first refrigerant fluid and a source environment, and
   a throttling valve,
- a second fluid circuit provided with a supply line and a return line to circulate a second fluid to a destination environment,
- a second heat exchanger to exchange heat between the second refrigerant fluid and the destination environment.

For example, the first heat exchanger is configured to exchange heat between the first refrigerant fluid and the air in the source environment or water contained in a well, an aquifer, a surface basin, a river, or an accumulation tank present in the source environment.

For example, the second heat exchanger is configured to exchange heat between the second refrigerant fluid and the air in the destination environment.

Another aspect of the invention comprises a monitoring device installable or installed on an electric refrigeration and/or heating machine, e.g. such as the above-mentioned machine. In general, the monitoring device comprises means for carrying out the aforementioned detection, processing and decision-making steps of the method.

In particular, the monitoring device comprises:
- an electrical-power meter installed, or configured to be installed, on the electrical supply of a refrigeration and/or heating machine in order to detect the electrical power absorbed by that machine,
- a temperature sensor configured to detect the temperature difference between the temperature of a fluid present in a supply line and in a return line comprised in a closed fluid loop between a heat exchanger located in a source environment and a heat exchanger located in a destination environment,
- a fluid-flowrate meter to measure the fluid flowrate in the closed circuit,
- means for calculating, from a datum output by the electrical-power meter, the electrical power absorbed by the machine,
- means for calculating, from a datum output by the temperature sensor and the flowrate meter, the cooling or heating power delivered/absorbed by the machine in the destination environment,
- means for calculating the machine's current efficiency as a function of the two powers calculated before,
- means for searching a database, as a function of said detected cooling or heating power and said detected electrical power, a nominal efficiency datum of the machine,
- means for comparing the current efficiency with the nominal efficiency and emitting an information signal as a function of the order relationship between the current efficiency and the nominal efficiency.

Preferably said means comprise or consist of an electronic circuit, more preferably a microprocessor.

Preferably, the monitoring device comprises a temperature sensor, installed or configured to be installed, in the source environment to detect the temperature of such environment, and the means for searching are configured to search the database for a nominal efficiency datum of the machine as a function of the detected temperature of the source environment as well.

Preferably, the monitoring device comprises a relative humidity sensor, either installed or configured to be installed, in the source environment to detect the relative humidity of such environment, and the means for searching are configured to search the database for a nominal efficiency datum of the machine as a function of the detected relative humidity of the source environment as well.

Preferably, the electronic circuit is
- connected or connectable via a signal line to an electronic controller embedded natively in the machine, and
- configured to vary the working point of the machine as a function of the relationship between the current efficiency and the nominal efficiency by generating a correction signal and transmitting it on the signal line.

Preferably, the monitoring device comprises means for transmitting a/the message or the information signal to a remote user, e.g. a GSM card, an Internet network card, a WI-FI or Bluetooth transmitter or transceiver.

Preferably the monitoring device comprises means for emitting an audible and/or visual signal, more preferably a display and/or a sound generator.

Preferably the monitoring device comprises means for transmitting a message in the form of phone text, or e-mail or a generic text message.

Preferably, the monitoring device comprises means for receiving a correction signal from remote location and transmitting it to the machine controller.

Another aspect of the invention comprises an aforementioned electric machine equipped with one said monitoring device according to one or each of its variants.

However, the advantages of the method and device will be clearer from the following description of a preferred embodiment, reference making to the attached drawing in which
- Fig. 1 shows a schematic of a thermal machine with an associated monitoring device;
- Fig. 2 shows a further schematic of thermal machine with associated monitoring device.

In the figures, arrows indicate a flow direction for a fluid; dashed lines indicate electrical signal lines.

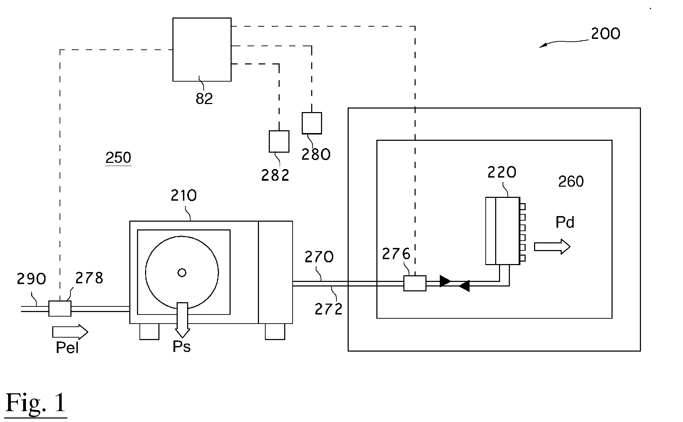

With reference to the general Fig. 1, an electric refrigeration machine 200 under consideration, here an air conditioner, has a heat exchanger 210 placed in an outdoor environment 250 and a heat exchanger 220 placed in an indoor environment 260 to be cooled.

When the machine 200 is operating it absorbs an electric power Pₑₗ from the electric mains 290, absorbs a caloric power P_{d} from the indoor environment 260 through the heat exchanger 220, and dissipates a caloric power Pₛ in the outdoor environment 250 through the heat exchanger 210.

There holds the balance Pₑₗ +P_{d} =Pₛ.

All manufacturers of refrigeration machines declare a nominal coefficient of performance (COP) of their machine that certifies its energy efficiency, defined as P_{d}/P_{del}. This coefficient is an average value.

For a complete and correct assessment of COP, the manufacturer states its value at different power ratings Pₑₗ, which generally range from 30% to 100%.

Between the heat exchanger 210 and the heat exchanger 220 is a known closed circuit for refrigerant fluid that has a supply line 270 and a return line 272.

A sensor 276 detects
- the temperature of the refrigerant fluid flowing in the supply line 270, called Tₘₐₙ,
- the temperature of the refrigerant fluid flowing in the return duct 272, called Tᵣᵢₜ, and
- the flow rate of the refrigerant fluid in the circuit, called Qᵢ .

A sensor 278, e.g. a wattmeter, measures the electrical power Pₑₗ.

An electronic control unit 82 receives data from the sensor 276 and the sensor 278 to continuously monitor the instantaneous powers produced and consumed by the machine 200 in real time. The electronic control unit 82 calculates an instantaneous efficiency coefficient as a ratio of P_{d}/Pₑₗ.

Specifically, P_{d} is calculated as Qᵢ * (Tₘₐₙ - Tᵣᵢₜ) x 1.156 (coefficient for the transformation from calories to watts).

The electronic control unit 82 searches an internal database for a nominal efficiency value indexed by the measured powers P_{d} and Pₑₗ. It then compares the calculated current efficiency with the nominal efficiency found in the database, and based on the comparison it emits a warning signal, e.g. signaling that the machine 200 is operating within the accepted efficiency limits or that the machine 200 is operating poorly.

The comparison between the actual values measured by the electronic control unit 82 and those declared by the manufacturer, for the same outdoor climatic conditions, can highlight the presence of significant discrepancies in the actual efficiency.

Often the manufacturer will declare a COP as a function of different temperatures Tₑₓₜ of the outdoor environment 250 in order to have a better description of their product.

To improve the estimation accuracy of the system, preferably a temperature sensor 280 is then provided to detect the temperature Tₑₓₜ of the outdoor environment 250. The electronic control unit 82 is connected to the temperature sensor 280 to receive the data therefrom and searches the internal database for a nominal efficiency value indexed by the sensed powers P_{d} and Pₑₗ and the temperature Tₑₓₜ.

To improve accuracy, the manufacturer often claims a COP as a function of different temperatures Tₑₓₜ and different relative humidity of the air in the outdoor 250 environment, valid when the machine 200 works as a heat pump. The relative humidity value of the outside air is a variable directly proportional to the energy content of the air itself. The higher the moisture content of the air, the greater the amount of thermal energy available to the machine 200. Preferably, a sensor 282 detects the relative humidity of the outside air, which becomes an additional term of comparison between the measured performance of the machine 200 and that claimed by the manufacturer. The electronic control unit 82 is connected to the humidity sensor 282 to receive a relative humidity datum U from it, and then searches the internal database for a nominal efficiency value indexed by the measured powers P_{d} and Pₑₗ and the humidity U.

More preferably, the electronic control unit 82 searches the internal database for a nominal efficiency value indexed by the measured powers Pd and Pel, humidity U, and temperature Tₑₓₜ.

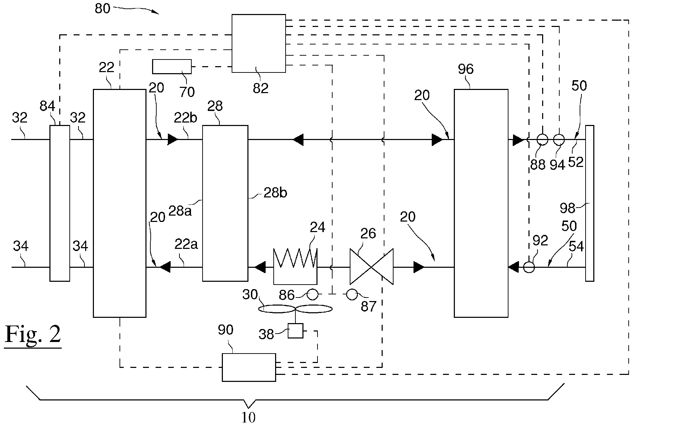

A variant of the system is shown in Fig. 2.

The block diagram in Fig. 2 schematically depicts an electric cooling and heating machine denoted overall with 10. The machine 10 comprises a closed circuit 20 for circulating a refrigerant fluid, and a circuit 50 useful for circulating an output fluid to a user 98.

The circuit 20 runs through and comprises in series a compressor 22, used to push the refrigerant fluid along the circuit 20, a heat exchanger 24, to exchange heat between the refrigerant fluid and the environment, and a throttle valve 26.

The refrigerant fluid always enters the compressor 22 from an inlet 22a and exits from an outlet 22b.

A flow-diverter device 28 is installed in the circuit 20 between the compressor 22 and the other components. The device 28 has an inlet port 28a connected to the compressor 22 and an outlet port 28b connected to the series of the throttle valve 26 and the heat exchanger 24. The inlet port 28a receives and sends fluid to the compressor 22 always with the same direction of circulation. The device 28 allows instead the flow direction of the refrigerant fluid at outlet port 28b to be simultaneously reversed, so that the fluid pumped by the compressor 22 can alternately and selectively reach either the throttle valve 26 or the heat exchanger 24 as the first element in the series.

For example, the closed circuit 20 and its associated components may be implemented in the machine 210 of fig, 1 with the same functions.

The user 98 can be e.g. the exchanger 220 in fig. 1.

A second heat exchanger 96 is placed between the circuit 20 and the circuit 50 to exchange heat between the refrigerant fluid in the circuit 20 and the fluid in the circuit 50.

Overall, the components of the machine 10 work in a known way to make it cool, in refrigeration mode, or heat, in heat-pump mode, the working fluid circulating in the circuit 50.

The machine 10 preferably comprises (in advanced models) an electronic control unit 90 to regulate the operation of the compressor 22, the throttle valve 26 and the other electrical components, such as the speed of a motor 38 that rotates a fan 30 installed to blow ambient air against the heat exchanger 24.

An auxiliary device 80 is applied to the machine 10 to determine its actual energy efficiency and alert a user of this.

The auxiliary device 80 comprises an electronic control unit 82 that is connected to:
- a sensor 84 placed on wires 32, 34 related to the power supply of the machine 10 (e.g. one live and one neutral). The sensor 84 measures e.g. voltage and current on the wires 32, 34;
- an (optional) temperature sensor 86 to detect the ambient temperature in which the heat exchanger 24 works;
- an (optional) humidity sensor 87 to detect the relative humidity in the environment in which the heat exchanger 24 works;
- a temperature sensor 88 to measure the temperature of the fluid in the supply line 52 of the circuit 50;
- a temperature sensor 92 to measure the temperature of the fluid in the return line 54 of the circuit 50;
- a meter 94 to measure the fluid flowrate in the circuit 50 (e.g. a flow-meter).

The electronic control unit 82 reads the signals emitted by the sensors 84, 86, 88, 92 and the meter 94 and converts them into processable data, e.g. digital data.

Using the data collected by the sensor 84, the electronic control unit 82 calculates via software the electrical power absorbed by the machine 10, here called Pₑₗ (the sensor 84 can be e.g. a well-known wattmeter).

Through the data collected from the sensors 88, 92 and the meter 94, the electronic control unit 82 calculates the heat output delivered or absorbed by the machine 10, here called P_{d}.

P_{d} may be calculated, for example, as R*(T₁-T₂)*C, where R is the flow- rate measured by the meter 94, T₁ is the temperature read by the sensor 88, T₂ is the temperature read by the sensor 92, and C is the heat capacity of the fluid in the circuit 50 (e.g. water).

The electronic control unit 82 calculates the current efficiency of the machine 10 e.g. from the ratio of P_{d}/Pₑₗ.

Then the electronic control unit 82 calculates the nominal efficiency of the machine 10 as a function of P_{d} and Pₑₗ. The manufacturer of each machine 10 provides in tabular or graphical form the efficiency of the machine as a function of P_{d} and Pₑₗ, data that the electronic control unit 82 has in a memory. By finding the correspondence of the current efficiency as a function of P_{d} and Pₑₗ found on the characteristic curve of the machine 10, e.g. by means of a look-up table, the electronic unit 82 determines its nominal efficiency (the data loaded into the electronic unit 82 are for the specific machine 10 with which the electronic unit 82 is associated).

The electronic control unit 82 then compares the current efficiency with the nominal efficiency, and emits an information signal to a user about it. The information signal changes as a function of the relationship between the current efficiency and the nominal efficiency. E.g., if the nominal efficiency is slightly higher than the current efficiency or is within a tolerance margin, the information signal will alert the user of the good condition of the machine 10. Conversely, the information signal will warn the user that the machine 10 consumes too much and needs maintenance.

The information signal can be generated in many forms: e.g., a message on a display of the control unit 82, a phone text, an e-mail, or a specific sound.

In a preferred advantageous variant, the electronic control unit 82 not only generates alerts for the user but also acts to improve the performance of the machine 10. The electronic control unit 82 may, for example, be connected to the compressor 22 and/or the throttle valve 26 with a signal line. The electronic control unit 82 generates and sends to these components a correction signal that changes the operating parameters of the compressor 22 and/or the throttle valve 26 to bring the current efficiency closer to the nominal efficiency. If the electronic control unit 90 is present in the machine 10, the electronic control unit 82 may send the correction signal directly to the control unit 90, which will correct the operation of the compressor 22 and/or the throttle valve 26 accordingly.

In a preferred advantageous variant, the electronic control unit 82 is connected to a signal transmitter 70 to send an information signal to a remote user. The transmitter 70 is, for example, a GSM card, a Bluetooth or WI-FI card, or an Internet network card.

The flow diverter device 28 is optional, if the machine 10 is only able to generate cooled or heated fluid in the circuit 50.

To determine the machine's efficiency more precisely, the manufacturer gives its efficiency data parameterized also as a function of the temperature Tₑₓₜ, and/or also as a function of the relative humidity present around the exchanger 24.

Preferably then the electronic control unit 82 also calculates the nominal efficiency of the machine 10 by means of the data emitted by the temperature sensor 92, i.e. Tₑₓₜ, and/or by means of the data emitted by the sensor 87.

The user 98 can be a heat exchanger.

All the functions and/or components of the machine 10 may be implemented in the machine 200 in Fig. 1.

All the functions and/or components of the auxiliary device 80 may be implemented in or by the control unit 82 in Fig. 1.

## Claims

1. Method performed electronically by an electronic device, e.g. via software, for determining the real energy efficiency of an electric cooling and/or heating machine that is powered electrically and works to transfer heat from a source environment to a destination environment or vice versa, wherein the electronic device in real time:
detects the electrical power absorbed by the machine, here called Pₑₗ,
detects the heat power absorbed or dissipated in the destination environment by the machine, here called P_{d};
calculates the current efficiency of the machine as a function of the two powers Pₑₗ and P_{d},
determines the nominal efficiency of the machine by searching in a database for a nominal efficiency value which is a function of the powers Pₑₗ and P_{d},
compares the current efficiency with the calculated nominal efficiency, and
outputs an information signal according to the order relationship between the current efficiency and the calculated nominal efficiency.

2. Method according to claim 1, wherein the method is carried out continuously, or periodically with a programmable interval.

3. Method according to any preceding claim, wherein the nominal efficiency of the machine is determined by searching a database for a nominal efficiency value which is a function of the powers Pel and Pd, and a function of the detected temperature of the source environment.

4. Method according to any preceding claim, wherein the nominal efficiency of the machine is determined by searching a database for a nominal efficiency value which is a function of the powers Pₑₗ and P_{d}, and a function of the relative humidity of the air detected in the source environment.

5. Method according to any preceding claim, wherein the database comprises or consists of characteristic tables or curves that can be consulted digitally.

6. Method according to any preceding claim, wherein the power P_{d} is calculated by detecting the temperature difference of a fluid circulating in a circuit,
the difference being
calculated between the temperature of the fluid in a supply duct to the destination environment and the temperature of the fluid in a return duct from the destination environment, and then
multiplied by
the flowrate of fluid in the supply and return ducts, and
a constant.

7. Method according to any preceding claim, wherein to generate the information signal it is evaluated whether the current efficiency is within a compliance range around the nominal efficiency.

8. Method according to any preceding claim, wherein as a function of the relationship between current efficiency and nominal efficiency, a correction signal is generated, and
the correction signal is sent to an electronic controller natively embedded in the machine to vary the working point of the machine.

9. Method according to any preceding claim, wherein in the step of emitting the information signal a message is transmitted to a remote user.

10. Method according to any preceding claim, wherein in the step of outputting the information signal
• an acoustic and/or visual signal is emitted, and/or
• a message is generated in the form of telephone text, or e-mail or generic text message.

## Patentansprüche

1. Elektronisch durch eine elektronische Vorrichtung, z. B. über Software, durchgeführtes Verfahren zur Bestimmung der tatsächlichen Energieeffizienz einer elektrischen Kühl- und/oder Heizmaschine, die elektrisch angetrieben wird und so arbeitet, dass sie Wärme von einer Quellumgebung zu einer Zielumgebung oder umgekehrt überträgt, wobei die elektronische Vorrichtung in Echtzeit:
die von der Maschine aufgenommene elektrische Leistung, hier Pₑₗ genannt, erfasst,
die von der Maschine in der Zielumgebung aufgenommene oder abgegebene Wärmeleistung, hier P_{d} genannt, erfasst;
die aktuelle Effizienz der Maschine als Funktion der beiden Leistungen Pₑₗ und P_{d} berechnet,
die Nenneffizienz der Maschine bestimmt, indem in einer Datenbank nach einem Nenneffizienzwert gesucht wird, der eine Funktion der Leistungen Pₑₗ und P_{d} ist,
die aktuelle Effizienz mit der berechneten Nenneffizienz vergleicht, und
ein Informationssignal gemäß der Ordnungsbeziehung zwischen der aktuellen Effizienz und der berechneten Nenneffizienz ausgibt.

2. Verfahren nach Anspruch 1, wobei das Verfahren kontinuierlich oder periodisch mit einem programmierbaren Intervall durchgeführt wird.

3. Verfahren nach einem der vorhergehenden Ansprüche, wobei die Nenneffizienz der Maschine bestimmt wird, indem in einer Datenbank nach einem Nenneffizienzwert gesucht wird, der eine Funktion der Leistungen Pₑₗ und P_{d} sowie eine Funktion der erfassten Temperatur der Quellumgebung ist.

4. Verfahren nach einem der vorhergehenden Ansprüche, wobei die Nenneffizienz der Maschine bestimmt wird, indem in einer Datenbank nach einem Nenneffizienzwert gesucht wird, der eine Funktion der Leistungen Pₑₗ und P_{d} sowie eine Funktion der in der Quellumgebung erfassten relativen Luftfeuchtigkeit ist.

5. Verfahren nach einem der vorhergehenden Ansprüche, wobei die Datenbank charakteristische Tabellen oder Kurven umfasst oder daraus besteht, die digital abgefragt werden können.

6. Verfahren nach einem der vorhergehenden Ansprüche, wobei die Leistung P_{d} durch Erfassen der Temperaturdifferenz eines in einem Kreislauf zirkulierenden Fluids berechnet wird,
wobei die Differenz
zwischen der Temperatur des Fluids in einer Zuleitung zur Zielumgebung und der Temperatur des Fluids in einer Rückleitung von der Zielumgebung berechnet und anschließend
multipliziert wird mit
dem Durchfluss des Fluids in den Zu- und Rückleitungen und
einer Konstante.

7. Verfahren nach einem der vorhergehenden Ansprüche, wobei zur Erzeugung des Informationssignals ausgewertet wird, ob die aktuelle Effizienz innerhalb eines Konformitätsbereichs um die Nenneffizienz liegt.

8. Verfahren nach einem der vorhergehenden Ansprüche, wobei als Funktion der Beziehung zwischen aktueller Effizienz und Nenneffizienz un Korrektursignal erzeugt wird, und
das Korrektursignal an eine werkseitig in die Maschine integrierte elektronische Steuerung gesendet wird, um den Betriebspunkt der Maschine zu verändern.

9. Verfahren nach einem der vorhergehenden Ansprüche, wobei im Schritt des Ausgebens des Informationssignals eine Nachricht an einen entfernten Benutzer übermittelt wird.

10. Verfahren nach einem der vorhergehenden Ansprüche, wobei im Schritt des Ausgebens des Informationssignals
• ein akustisches und/oder visuelles Signal ausgegeben wird, und/oder
• eine Nachricht in Form eines Telefontextes, einer E-Mail oder einer generischen Textnachricht erzeugt wird.

## Revendications

1. Procédé exécuté électroniquement par un dispositif électronique, par exemple par l'intermédiaire d'un logiciel, pour déterminer l'efficacité énergétique réelle d'une machine électrique de refroidissement et/ou de chauffage qui est alimentée électriquement et fonctionne de manière à transférer de la chaleur d'un environnement source vers un environnement de destination ou vice versa, dans lequel le dispositif électronique, en temps réel :
détecte la puissance électrique absorbée par la machine, dénommée ici Pₑₗ,
détecte la puissance thermique absorbée ou dissipée dans l'environnement de destination par la machine, dénommée ici P_{d};
calcule l'efficacité courante de la machine en fonction des deux puissances Pₑₗ et P_{d},
détermine l'efficacité nominale de la machine en recherchant dans une base de données une valeur d'efficacité nominale qui est fonction des puissances Pₑₗ et P_{d},
compare l'efficacité courante avec l'efficacité nominale calculée, et
émet un signal d'information selon la relation d'ordre entre l'efficacité courante et l'efficacité nominale calculée.

2. Procédé selon la revendication 1, dans lequel le procédé est mis en œuvre de manière continue, ou de manière périodique avec un intervalle programmable.

3. Procédé selon l'une quelconque des revendications précédentes, dans lequel l'efficacité nominale de la machine est déterminée en recherchant dans une base de données une valeur d'efficacité nominale qui est fonction des puissances Pₑₗ et P_{d}, et fonction de la température détectée de l'environnement source.

4. Procédé selon l'une quelconque des revendications précédentes, dans lequel l'efficacité nominale de la machine est déterminée en recherchant dans une base de données une valeur d'efficacité nominale qui est fonction des puissances Pₑₗ et P_{d}, et fonction de l'humidité relative de l'air détectée dans l'environnement source.

5. Procédé selon l'une quelconque des revendications précédentes, dans lequel la base de données comprend ou est constituée de tableaux ou de courbes caractéristiques consultables par voie numérique.

6. Procédé selon l'une quelconque des revendications précédentes, dans lequel la puissance Pd est calculée en détectant la différence de température d'un fluide circulant dans un circuit,
ladite différence étant
calculée entre la température du fluide dans une conduite d'amenée vers l'environnement de destination et la température du fluide dans une conduite de retour depuis l'environnement de destination, puis
multipliée par
le débit de fluide dans les conduites d'amenée et de retour, et
une constante.

7. Procédé selon l'une quelconque des revendications précédentes, dans lequel, pour générer le signal d'information, il est évalué si l'efficacité courante s'inscrit dans une plage de conformité autour de l'efficacité nominale.

8. Procédé selon l'une quelconque des revendications précédentes, dans lequel, en fonction de la relation entre l'efficacité courante et l'efficacité nominale, un signal de correction est généré, et
le signal de correction est envoyé à un contrôleur électronique intégré nativement dans la machine pour modifier le point de fonctionnement de la machine.

9. Procédé selon l'une quelconque des revendications précédentes, dans lequel, lors de l'étape d'émission du signal d'information, un message est transmis à un utilisateur distant.

10. Procédé selon l'une quelconque des revendications précédentes, dans lequel, lors de l'étape d'émission du signal d'information
• un signal acoustique et/ou visuel est émis, et/ou
• un message est généré sous la forme d'un texte téléphonique, d'un e-mail ou d'un message textuel générique.
